# FASCICULE DE BREVET EUROPEEN

(11) **EP 1 345 007 B1**
(45) Date de publication et mention de la délivrance du brevet: **24.12.2008**
(21) Numéro de dépôt: 03290462.5
(22) Date de dépôt: 27.02.2003
(51) Int. Cl.: G01C 15/04, E02D 5/80, E01F 9/011, E04H 12/22

(54) **Borne topographique**
Topographischer Abmarkungsstein
Surveying marker

(30) Priorité: 12.03.2002 FR 0203057
(43) Date de publication de la demande: 17.09.2003
(73) Titulaire: Gissinger, Jean-Edouard, 08800 Thilay (FR); Gissinger, Charles, 08800 Thilay (FR); Thevenin, Patrick, 08150 Bolmont (FR); Thevenin, Stéphane, 51420 Witry Les Reims (FR)
(72) Inventeur: Gissinger, Jean-Edouard, 08800 Thilay (FR); Gissinger, Charles, 08800 Thilay (FR); Thevenin, Patrick, 08150 Bolmont (FR); Thevenin, Stéphane, 51420 Witry Les Reims (FR)
(74) Mandataire: Laget, Jean-Loup

(56) Documents cités:
- FR-A- 2 244 159
- FR-A- 2 692 609

## Description

L'invention est relative à une borne topographique, destinée à être utilisée pour définir des limites cadastrales, des limites de routes, des limites de propriété, des délimitations de parcelles notamment à l'occasion d'opérations cadastrales et de remembrements fonciers, ainsi que pour toutes applications analogues.

Le brevet français FR 2244159 décrit une borne utilisable pour définir des limites cadastrales, des limites de routes et pour des applications analogues. Cette borne comprend une tête de borne et un organe d'ancrage indépendant de la tête de borne. La tête de borne est munie d'un perçage central présentant une réduction de section droite entre les faces supérieure et inférieure de la tête de borne. L'organe d'ancrage peut coulisser librement dans le perçage central de la tête de borne, à l'exception de son extrémité supérieure dont la section droite est plus grande que la section du perçage central au niveau de la face inférieure de la tête de borne.

Cette borne peut être posée rapidement et de manière précise en plaçant la tête de borne sur le sol au point requis, en engageant l'organe d'ancrage dans le perçage de cette tête de borne et en frappant au marteau sur cet organe d'ancrage pour assurer sa pénétration dans le sol jusqu'à proximité de la partie de plus grande section de l'organe d'ancrage avec la réduction de section du perçage de la tête de borne. Après enfoncement de l'organe d'ancrage dans le sol, on introduit un mandrin dans la partie supérieure de l'élément tubulaire de cet organe d'ancrage et on repousse à l'aide de ce mandrin les éléments déformables pour provoquer leur sortie par les ouvertures dudit élément tubulaire et leur pénétration dans le sol afin de réaliser un ancrage efficace et définitif.

Les bornes du type décrit dans le brevet français FR 2244159 donnent entièrement satisfaction, en particulier grâce à leur rapidité de pose, la multiplicité des combinaisons possibles de têtes et d'organes d'ancrage, et une réduction en volume et en valeur des stocks de têtes de borne et d'organes d'ancrage.

Cependant, lors d'opérations importantes de bornage, la charge à transporter par un géomètre correspond à plus d'une vingtaine de bornes topographiques et se révèle encombrante et lourde pour le géomètre qui doit parcourir à pied des centaines de mètres, voire des kilomètres.

Ceci amène de nombreux géomètres, en particulier les géomètres féminins, à remplacer les bornes du type décrit dans le brevet FR 2244159 par des bornes monobloc plus légères en matière plastique, et ne donnant pas satisfaction en ce qui concerne la précision et la durabilité du bornage.

Un but de l'invention est de remédier aux inconvénients de la technique connue, en procurant une nouvelle borne présentant les mêmes avantages de durabilité et de précision de pose que les bornes du type décrit dans le brevet FR 2244159, tout en présentant un poids plus léger.

Un autre but de l'invention est de fournir un organe d'ancrage de volume et de poids inférieurs aux volume et poids des organes d'ancrage du type décrit dans le brevet FR 2244159, de manière à alléger la charge à transporter par un géomètre.

L'invention a pour objet une borne topographique, comportant d'une part une tête de borne munie d'un épaulement et d'un perçage, et d'autre part un organe d'ancrage muni d'une collerette de retenue et d'une partie allongée creuse avec au moins une ouverture débouchante pour permettre le passage d'un moyen de verrouillage, caractérisée par le fait que l'organe d'ancrage est ouvert à l'extrémité de la partie allongée creuse et présente une conformation interne de guidage pour ledit moyen de verrouillage, lorsque ce moyen de verrouillage est poussé à l'intérieur de ladite conformation interne à l'aide d'un outil d'enfoncement.

Selon d'autres caractéristiques alternatives de l'invention :
- l'organe d'ancrage peut être fabriqué en matériau léger,
- l'organe d'ancrage présente une partie tubulaire à section polygonale régulière, dont les génératrices diagonalement opposées constituent une conformation interne de guidage pour ledit moyen de verrouillage,
- l'organe d'ancrage présente une partie tubulaire avec des rainures ou des profils internes de guidage pour ledit moyen de verrouillage,
- le moyen de verrouillage peut être conformé en épingle ou en broche,
- le moyen de verrouillage peut être conformé en boucle croisée,
- le moyen de verrouillage peut présenter des courbures en S pour améliorer son guidage au cours de sa descente et faciliter la sortie de ses extrémités par les ouvertures de la partie allongée creuse.
- le moyen de verrouillage peut présenter des extrémités sphériques ou à bords pliés pour faciliter leur passage dans les ouvertures de la partie allongée creuse,

L'invention est également relative à un outil de bornage utilisable pour la mise en place de nombreuses bornes selon l'invention.

Selon d'autres caractéristiques de l'invention :
- un outil d'enfoncement pour borne comporte une tête et une tige de longueur supérieure à la longueur de ladite partie allongée creuse, de manière à rigidifier l'organe d'ancrage lors de son enfoncement,
- l'outil peut présenter une extrémité de tige pointue ou effilée.

L'invention sera mieux comprise grâce à la description qui va suivre donnée à titre d'exemple non limitatif en référence aux dessins annexés dans lesquels :
- La figure 1 représente schématiquement, une vue en perspective d'une borne selon l'invention en position d'ancrage.
- La figure 2 représente schématiquement, une vue en élévation avec coupe de la tête de borne par un plan vertical d'une borne selon l'invention avant ancrage.
- La figure 3 représente schématiquement, une vue partielle en perspective avec arrachement partiel d'un organe d'ancrage selon l'invention après introduction d'un moyen d'ancrage.
- Les figures 4 à 8 représentent schématiquement les étapes successives d'un procédé de pose de borne selon l'invention.
- La figure 9 représente schématiquement, des vues en section d'organe d'ancrage selon l'invention.
- la figure 10 représente schématiquement, des vues en élévation latérale d'épingles ou de moyens d'ancrage de borne selon l'invention.

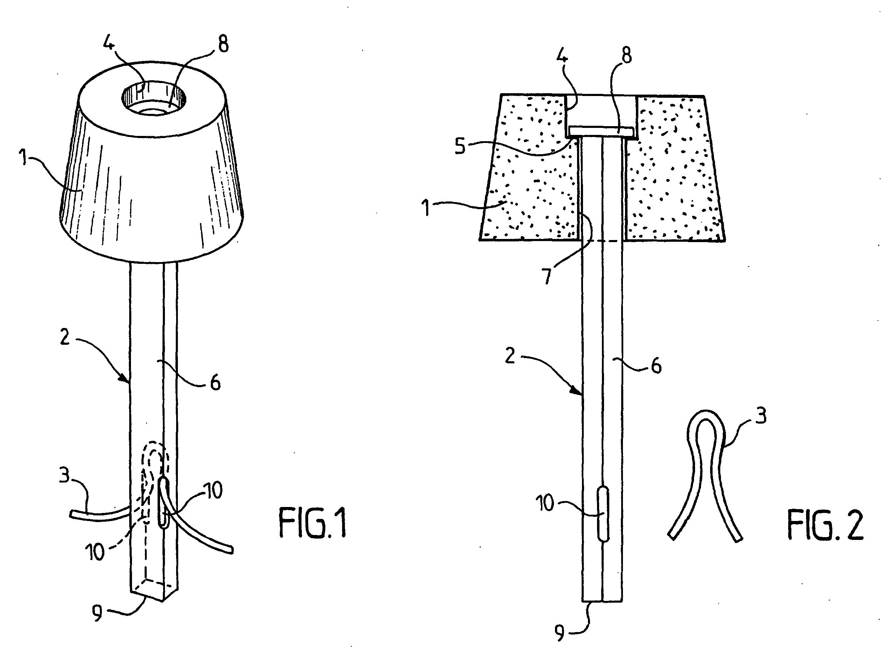

En référence aux figures 1 à 3, les éléments identiques ou fonctionnellement équivalents sont repérés par des chiffres de référence identiques.

Une borne selon l'invention comporte une tête 1 de borne, un organe 2 tubulaire d'ancrage et un moyen 3 de verrouillage, par exemple en forme d'épingle ou de broche.

La tête 1 de borne, l'organe 2 d'ancrage et le moyen 3 de verrouillage sont indépendants entre eux et peuvent être transportés séparément.

La tête 1 de borne est de préférence réalisée en matériau léger (plastique moulé, béton de résine léger, aluminium, résine synthétique associée à des charges légères du genre sciure de bois, billes creuses de verre, billes de polystyrène expansé,...).

L'organe 2 d'ancrage peut également âtre réalisé en matériau léger ou de faible épaisseur.

La tête 1 de borne présente un perçage comportant une partie supérieure de grand diamètre et une partie inférieure de diamètre réduit, de manière à constituer au bas de la partie supérieure 4 de grand diamètre un épaulement 5 constituant une butée pour l'organe 2 d'ancrage.

L'organe 2 d'ancrage présente une partie allongée tubulaire 6 destinée à pénétrer dans le sol en passant par la partie 7 de perçage de diamètre réduit de la tête de borne, et comporte une collerette 8 de tête venant en butée sur l'épaulement 5. L'organe d'ancrage 2 est ouvert à son extrémité inférieure 9, constituée par exemple par une extrémité tronçonnée d'un profilé tubulaire assemblé à la collerette 8.

A faible distance au-dessus de l'extrémité ouverte 9, l'organe 2 d'ancrage présente au moins une ouverture 10 et de préférence deux ouvertures 10 diamétralement opposées pour le passage des extrémités de l'épingle ou de la broche 3 de verrouillage.

Pour assurer le guidage de l'épingle 3 à l'intérieur de la partie allongée 6, on prévoit que l'intérieur du tube 6 présente une conformation de guidage : à cet effet, on peut utiliser comme partie allongée 6 un tube carré muni de deux ouvertures pratiquées en diagonale à travers la paroi du tube carré. Lors de la descente de l'épingle ou de la broche élastique 3, les extrémités prennent appui en diagonale à l'intérieur du tube carré 6 et sont guidées automatiquement jusqu'aux ouvertures 10 par lesquelles elles doivent passer pour assurer le verrouillage de la borne.

L'organe 3 peut être constitué en forme d'épingle élastique représentée en référence aux figures 1 à 3, ou peut adopter toute autre conformation sans sortir du cadre de la présente invention, l'essentiel étant que les extrémités du moyen de verrouillage 3 soient conformées pour passer à travers les ouvertures 10 en fin de guidage.

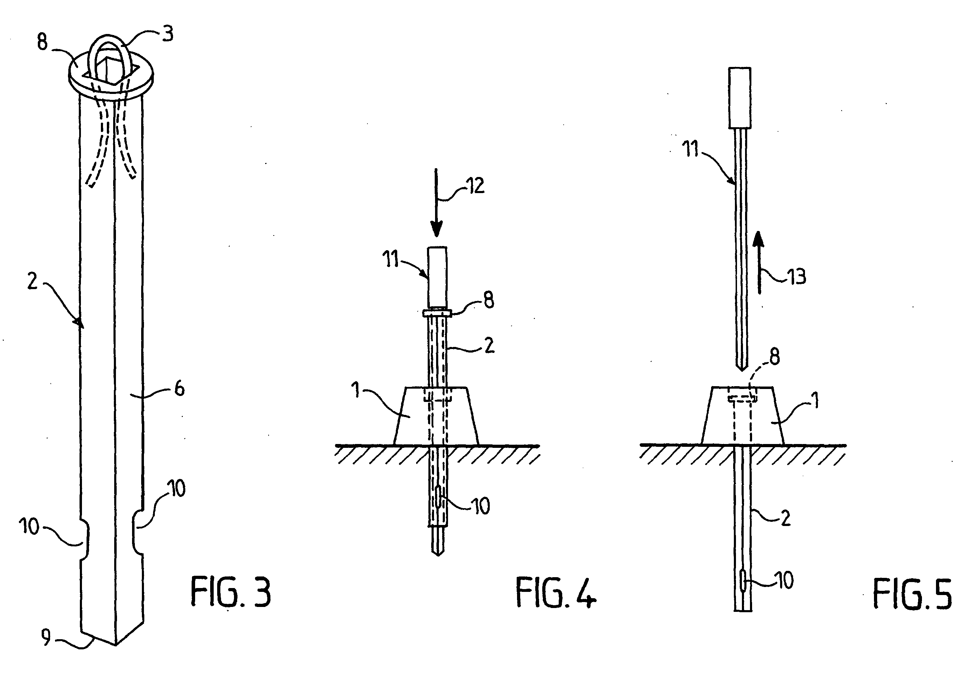

En référence aux figures 4 à 8, un procédé de pose de borne selon l'invention comprend les étapes successives suivantes :

Sur la figure 4, on pose la tête de borne 1 à l'emplacement requis sur le sol pour effectuer le bornage, on engage l'organe d'ancrage 2 à travers le perçage de la tête 1 de borne et on enfonce l'organe d'ancrage 2 dans le sol à l'aide d'un outil spécial 11 d'enfoncement en frappant sur celui-ci à l'aide d'un marteau non représenté dans le sens de la flèche 12. L'outil 11 présente une tête large apte à venir en butée sur la collerette 8 et une tige apte à pénétrer à l'intérieur de l'organe d'ancrage 2, de préférence en dépassant de celui-ci par l'ouverture 9. L'utilisation de l'outil 11 rigidifie l'organe 2 d'ancrage au cours de l'enfoncement et permet d'utiliser des organes d'ancrage 2 en matériau léger à paroi mince.

L'enfoncement de l'organe 2 d'ancrage à l'aide de l'outil 11 s 'effectue jusqu'à la venue en contact de la collerette 8 avec la tête 1 de borne.

Sur la figure 5, après avoir enfoncé l'organe 2 d'ancrage à la profondeur désirée, on retire l'outil 11 comme indiqué par une traction vers le haut dans le sens de la flèche 13 de la figure 5.

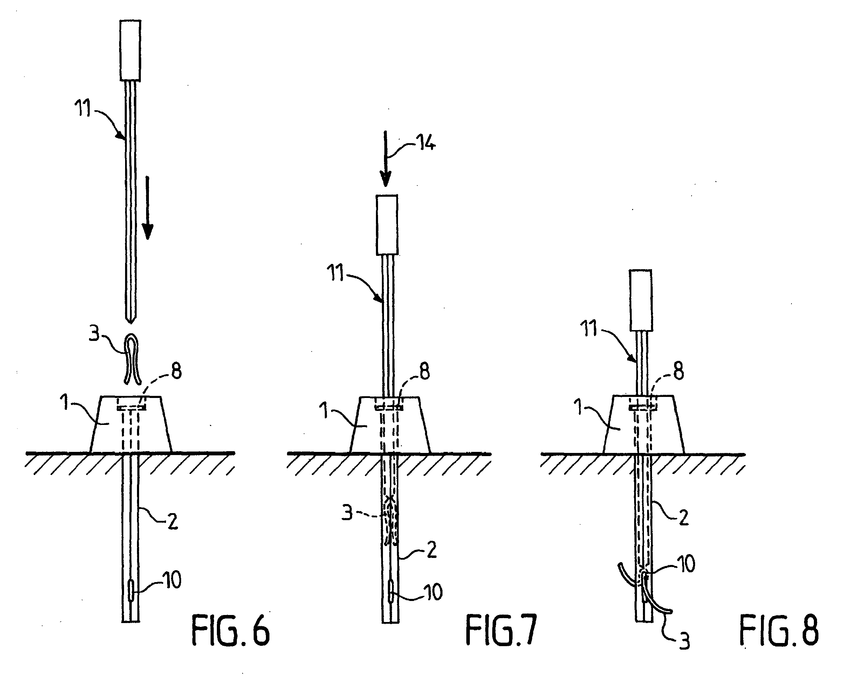

Sur la figure 6, après avoir retiré de l'outil 11 comme dans le sens de la flèche 13 représentée sur la figure 5, on introduit une épingle ou broche de verrouillage 3 à l'intérieur de l'organe 2 d'ancrage selon une orientation correspondant à un guidage de l'extrémité de la broche 3 par les génératrices sur lesquelles sont situées les ouvertures 10.

Sur la figure 7, à l'aide de l'outil spécial 11 d'enfoncement et en frappant éventuellement sur celui-ci à l'aide d'un marteau non représenté, on parachève l'enfoncement de la broche ou épingle 3 à l'intérieur de l'organe d'ancrage 2 jusqu'à faire déboucher les extrémités de la broche ou épingle 3 par l'ouverture 10.

Sur la figure 8, à l'aide de l'outil spécial 11 d'enfoncement et en frappant sur celui-ci à l'aide d'un marteau non représenté, on termine le verrouillage en déformant la broche 3 pour faire sortir les extrémités de la broche 3 par les ouvertures 10 et en assurant ainsi un ancrage dans le terrain.

L'application de coups de marteau sur l'outil 11 permet en effet de déformer l'épingle ou la broche 3 de manière irréversible et d'assurer un verrouillage efficace et irréversible de l'organe 2 d'ancrage dans le sol par les extrémités dépassant de l'épingle 3.

Après avoir effectué les opérations décrites en référence aux figures 4 à 8, la tête 1 de borne est verrouillée par la coopération de la collerette 8 de l'organe d'ancrage 2 avec l'épaulement 5 de la tête de borne 1, avec une force d'ancrage supérieure à 4000 Newton.

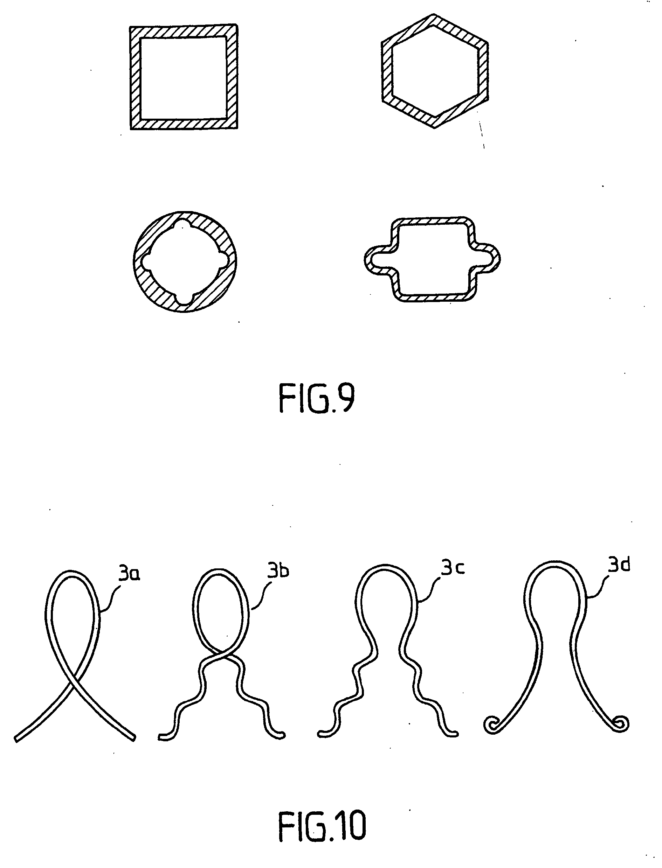

Sur la figure 9, on présente à titre d'exemple, diverses sections possibles pour la partie inférieure de l'organe 2 d'ancrage, obtenue à partir de tubes métalliques de type connu, ou par extrusion, filage ou déformation de matière pour obtenir des sections spécifiques.

Sur la figure 10, des variantes d'épingle 3 ou broche de verrouillage peuvent présenter une conformation de boucle croisée 3a, une conformation de boucle 3b avec des courbures en S pour obtenir un meilleur débouché à travers les ouvertures 10 ou une conformation en épingle 3c avec des courbures en S obtenant un meilleur débouché à travers les ouvertures 10, ou une conformation en épingle ou broche 3d avec des extrémités arrondies ou des bords pliés facilitant également le passage à travers les ouvertures 10.

L'invention décrite en référence à plusieurs modes de réalisation est seulement limitée par les revendications suivantes.

## Revendications

1. Procédé de pose de borne comportant en combinaison les étapes suivantes :
- poser une tête (1) de borne à l'emplacement requis sur le sol pour effectuer le bornage,
- engager un organe (2) d'ancrage à travers un perçage de la tête (1) de borne,
- enfoncer l'organe (2) d'ancrage dans le sol à l'aide d'un outil (11) d'enfoncement pénétrant à l'intérieur de l'organe (2) d'ancrage, de manière à rigidifier l'organe (6) d'ancrage lors de son enfoncement,
- retirer l'outil (11) d'enfoncement par traction vers le haut (13),
- introduire un moyen (3) de verrouillage à l'intérieur de l'organe (2) d'ancrage,
- enfoncer le moyen (3) de verrouillage dans l'organe (2) d'ancrage à l'aide de l'outil (11) d'enfoncement,
- terminer le verrouillage en déformant le moyen (3) de verrouillage pour en faire sortir au moins une extrémité par au moins une ouverture (10) débouchante de l'organe (2) d'ancrage, en assurant ainsi un ancrage dans le sol.

2. Borne pour la mise en oeuvre du procédé selon la revendication 1, comportant en combinaison
- une tête (1) de borne munie d'un épaulement (5) et d'un perçage (4, 7),
- un organe (2) d'ancrage muni d'une collerette (8) de retenue et d'une partie (6) allongée creuse avec au moins une ouverture débouchante (10),
- un moyen (3) de verrouillage,
**caractérisée en** combinaison par le fait que la tête (1) de borne, l'organe (2) d'ancrage et le moyen (3) de verrouillage sont indépendants entre eux; et par le fait que l'organe d'ancrage est ouvert (9) à l'extrémité de la partie (6) allongée creuse et présente une conformation interne de guidage pour ledit moyen (3) de verrouillage, lorsque ce moyen de verrouillage (3) est poussé à l'intérieur de ladite conformation interne.

3. Borne selon la revendication 2, **caractérisée par le fait que** l'organe d'ancrage (2) est fabriqué en matériau léger, par exemple en aluminium ou en plastique.

4. Borne selon la revendication 2 ou la revendication 3, **caractérisée par le fait que** l'organe d'ancrage (2) présente une partie (6) tubulaire à section polygonale régulière, dont les génératrices diagonalement opposées constituent une conformation interne de guidage pour ledit moyen (3) de verrouillage.

5. Borne selon la revendication 2 ou la revendication 3, **caractérisée par le fait que** l'organe d'ancrage (2) présente une partie tubulaire (6) avec des rainures ou des profils internes de guidage pour ledit moyen (3) de verrouillage.

6. Borne selon la revendication 2 ou la revendication 3, **caractérisée par le fait que** le moyen de verrouillage (3) est conformé en épingle ou en broche.

7. Borne selon la revendication 2 ou la revendication 3, **caractérisée par le fait que** le moyen de verrouillage est conformé en boucle croisée.

8. Borne selon la revendication 6 ou la revendication 7, **caractérisée par le fait que** le moyen de verrouillage (3) présente des courbures en S pour améliorer son guidage au cours de sa descente et faciliter la sortie de ses extrémités par les ouvertures (10) de la partie allongée creuse (6).

9. Borne selon la revendication 6 ou la revendication 7, **caractérisée par le fait que** le moyen de verrouillage (3) présente des extrémités sphériques ou à bords pliés pour faciliter leur passage dans les ouvertures (10) de la partie allongée (6) creuse.

10. Outil d'enfoncement pour la mise en oeuvre du procédé selon la revendication 1 de pose de borne utilisant une borne selon la revendication 2 ou la revendication 3, comportant une tête et une tige de longueur supérieure à la longueur de ladite partie (6) allongée creuse de l'organe (2) d'ancrage, de manière à rigidifier l'organe (6) d'ancrage lors de son enfoncement.

11. Outil selon la revendication 10, **caractérisé par le fait que** l'outil présente une extrémité de tige pointue ou effilée.

## Claims

1. A boundary marker staking method comprising the following steps in combination:
- placing a boundary marker (1) in the required location on the ground in order to carry out the boundary marking,
- engaging an anchoring means (2) through a hole in the boundary marker (1),
- driving the anchoring means (2) into the ground using a driving tool (11) penetrating the inside of the anchoring means (2) so as to make the anchoring means (6) rigid when it is driven in,
- removing the driving tool (11) by pulling upwards (13),
- inserting a locking means (3) into the anchoring means (2),
- driving the locking means (3) into the anchoring means (2) using the driving tool (11),
- completing the locking by deforming the locking means (3) so that at least one end comes out of at least one through-opening (10) in the anchoring means (2), thus ensuring anchorage in the ground.

2. The boundary marker to implement the method according to claim 1, comprising in combination
- a boundary marker (1) fitted with a shoulder and a hole (4, 7),
- an anchoring means (2) fitted with a retaining flange (8) and an extended hollow part (6) with at least one through-opening (10),
- a locking means (3),
- **characterised in** combination by the fact that the boundary marker (1), the anchoring means (2) and the locking means (3) are independent of each other; and by the fact that the anchoring means (2) is open (9) at the end of the extended hollow part (6) and presents an internal guiding conformation for said locking means (3), when this locking means (3) is pushed inside said internal conformation.

3. The boundary marker according to claim 2, **characterised in that** the anchoring means (2) is made from a light material, for example aluminium or plastic.

4. The boundary marker according to claim 2 or claim 3, **characterised in that** the anchoring means (2) has a tubular part (6) with a regular polygonal section, whose diagonally opposed generating lines constitute an internal guiding conformation for said locking means (3).

5. The boundary marker according to claim 2 or 3, **characterised in that** the anchoring means (2) has a tubular part (6) with grooves or internal guiding profiles for said locking means (3).

6. The boundary marker according to claim 2 or 3, **characterised in that** the locking means (3) is in the shape of a pin or spike.

7. The boundary marker according to claim 2 or 3, **characterised in that** the locking means (3) is in the form of a crossover loop.

8. The boundary marker according to claim 6 or 7, **characterised in that** the locking means (3) has S-shaped curves to improve its guiding whilst being lowered and to facilitate the exit of its ends through the openings (10) in the extended hollow part (6).

9. The boundary marker according to claim 6 or 7, **characterised in that** the locking means (3) have ends which are spherical or with folded edges to facilitate their passage into the openings (10) of the extended hollow part (6).

10. Driving tool to implement the method according to claim 1 to set a boundary marker using a boundary marker according to claim 1 or 3, comprising a head and a shaft whose length is greater than the length of said extended hollow part (6) of the anchoring means (2), so as to make the anchoring part (6) rigid when it is driven in.

11. The tool according to claim 10, **characterised in that** the tool has a pointed or tapered shaft end.

## Patentansprüche

1. Verfahren zum Verlegen eines Grenzsteins, das in Kombination die folgenden Schritte umfaßt:
- Verlegen eines Grenzsteinkopfes (1) an der erforderlichen Stelle am Boden, um die Grenzmarkierung vorzunehmen,
- Einführen eines Verankerungsorgans (2) durch eine Bohrung im Grenzsteinkopf (1),
- Eintreiben des Verankerungsorgans (2) in den Boden mit Hilfe eines Eintreibwerkzeugs (11), das in das Innere des Verankerungsorgans (2) hineinläuft, um das Verankerungsorgan (6) bei dessen Eintreiben zu versteifen,
- Herausziehen des Eintreibwerkzeugs (11) durch Zug nach oben (13),
- Einführen eines Verriegelungsmittels (3) in das Innere des Verankerungsorgans (2),
- Eintreiben des Verriegelungsmittels (3) in das Verankerungsorgan (2) mit Hilfe des Eintreibwerkzeugs (11),
- Beenden der Verriegelung durch Verformen des Verriegelungsmittels (3), um mindestens ein Ende durch mindestens eine Auslaßöffnung (10) des Verankerungsorgans (2) austreten zu lassen und so eine Verankerung im Boden sicherzustellen.

2. Grenzstein zur Durchführung des Verfahrens nach Anspruch 1, der in Kombination umfaßt:
- einen Grenzsteinkopf (1), der mit einer Schulter (5) und einer Bohrung (4, 7) versehen ist,
- ein Verankerungsorgan (2), das mit einem Haltekragen (8) und mit einem länglichen, hohlen Abschnitt (6) mit mindestens einer Auslaßöffnung (10) versehen ist,
- ein Verriegelungsmittel (3),
in Kombination **dadurch gekennzeichnet, daß** der Grenzsteinkopf (1), das Verankerungsorgan (2) und das Verriegelungsmittel (3) unabhängig voneinander sind, und daß das Verankerungsorgan am Ende des länglichen, hohlen Abschnittes (6) offen (9) ist und eine Innenformgebung zur Führung des Verriegelungsmittels (3) aufweist, wenn das Verriegelungsmittel (3) in das Innere der Innenformgebung hineingeschoben wird.

3. Grenzstein nach Anspruch 2, **dadurch gekennzeichnet, daß** das Verankerungsorgan (2) aus einem leichten Material, z. B. Aluminium oder Kunststoff, gefertigt ist.

4. Grenzstein nach Anspruch 2 oder Anspruch 3, **dadurch gekennzeichnet, daß** das Verankerungsorgan (2) einen rohrförmigen Abschnitt (6) mit einem regelmäßig-polygonalem Querschnitt aufweist, dessen einander diagonal gegenüberliegende Erzeugende eine Innenformgebung zur Führung des Verriegelungsmittels (3) ausbilden.

5. Grenzstein nach Anspruch 2 oder Anspruch 3, **dadurch gekennzeichnet, daß** das Verankerungsorgan (2) einen rohrförmigen Abschnitt (6) mit Nuten oder Innenprofilen zur Führung des Verriegelungsmittels (3) aufweist.

6. Grenzstein nach Anspruch 2 oder Anspruch 3, **dadurch gekennzeichnet, daß** das Verriegelungsmittel (3) als Nadel oder Dorn ausgebildet ist.

7. Grenzstein nach Anspruch 2 oder Anspruch 3, **dadurch gekennzeichnet, daß** das Verriegelungsmittel als überkreuzte Schlaufe ausgebildet ist.

8. Grenzstein nach Anspruch 6 oder Anspruch 7, **dadurch gekennzeichnet, daß** das Verriegelungsmittel (3) S-förmige Krümmungen aufweist, um seine Führung im Verlauf seiner Abwärtsbewegung zu verbessern und das Herausführen seiner Enden durch die Öffnungen (10) des länglichen, hohlen Abschnittes (6) zu erleichtern.

9. Grenzstein nach Anspruch 6 oder Anspruch 7, **dadurch gekennzeichnet, daß** das Verriegelungsmittel (3) kugelförmige oder mit gefalzten Rändern versehene Enden aufweist, um deren Einführung in die Öffnungen (10) des länglichen, hohlen Abschnittes (6) zu erleichtern.

10. Eintreibwerkzeug zur Durchführung des Verfahrens nach Anspruch 1 zum Verlegen eines Grenzsteins unter Verwendung eines Grenzsteins nach Anspruch 2 oder Anspruch 3, mit einem Kopf und einem Schaft, der länger als der längliche, hohle Abschnitt (6) des Verankerungsorgans (2) ist, um das Verankerungsorgan (6) bei dessen Eintreiben zu versteifen.

11. Werkzeug nach Anspruch 10, **dadurch gekennzeichnet, daß** das Werkzeug ein spitzes oder sich verjüngendes Schaftende aufweist.
